# FASCICULE DE BREVET EUROPEEN

(11) **EP 2 607 907 B1**
(45) Date de publication et mention de la délivrance du brevet: **28.11.2018**
(21) Numéro de dépôt: 12198466.0
(22) Date de dépôt: 20.12.2012
(51) Int. Cl.: G01P 15/097, G01P 15/12, G01P 15/18, G01C 19/5712

(54) **Dispositif micro/nano capteur inertiel multiaxial de mouvements**
Vorrichtung mit einem multiaxialen Trägheitsmikro-/-nanosensor zur Bewegungserfassung
Micro/nano multiaxial inertial motion sensor device

(30) Priorité: 22.12.2011 FR 1162248
(43) Date de publication de la demande: 26.06.2013
(73) Titulaire: COMMISSARIAT À L'ÉNERGIE ATOMIQUE ET AUX ÉNERGIES ALTERNATIVES, 75015 Paris (FR)
(72) Inventeur: Walther, Arnaud, 38000 Grenoble (FR)
(74) Mandataire: Decobert, Jean-Pascal

(56) Documents cités:
- EP-A1- 2 339 293
- EP-A2- 1 762 823
- DE-A1-102007 054 505
- US-A1- 2010 223 996

## Description

### Domaine technique

La présente invention concerne généralement les capteurs inertiels de type accéléromètre, gyroscope ou gyromètre multiaxes miniature. Elle concerne en particulier les capteurs multiaxes fabriqués en technologie MEMS, capables de détecter des vitesses angulaires et des accélérations linéaires selon plusieurs axes associant accéléromètres et/ou gyroscopes.

### Etat de l'art

Il existe dans la littérature plusieurs exemples de capteurs inertiels multiaxes fabriqués en technologie MEMS « Micro Electro-Mechanical Systems » grâce à ses propriétés de semi-conducteur et ses qualités mécaniques.

En particulier, le document US20100223996A1 décrit un capteur inertiel comprenant une pluralité d'axes de détection. Le document DE102007054505A1 décrit, quant à lui, un capteur comprenant un substrat, une pluralité de structures couplées en elles et des moyens pour exciter lesdites structures. Le document EP2339293A1 décrit un gyroscope de type micro-électro-mécanique et le document EP1762823A2 décrit un capteur pour mesurer les vibrations.

A partir d'un substrat, les micro-systèmes sont formés dans un plan et gravés à la surface de ce dernier à l'aide des moyens et méthodes des technologies de la microélectronique, notamment de dépôts ou croissance de matériaux divers en couches multiples, ainsi que des technologies de la photolithographie pour définir les motifs.

Dans un exemple de structure de capteur inertiel, on retrouve un capteur comportant une partie fixe telle une partie d'un substrat employé dans les technologies MEMS. Une autre partie, dite partie mobile, est montée relativement à la partie fixe de sorte à lui préserver des libertés de mouvements. La partie mobile forme la portion du capteur dans laquelle une pseudo force de Coriolis est créée en cas de rotation sous condition d'excitation selon un axe suivant lequel on opère la détection de ladite force ou dans laquelle une force d'accélération est créée selon un axe suivant lequel on opère la détection.

Il est possible, dans un même dispositif, de juxtaposer plusieurs capteurs chacun dédié à la détection d'un mouvement. Néanmoins il existe un besoin d'améliorer cette technologie.

### Résumé de l'invention

La présente invention concerne un capteur inertiel multiaxes de mouvement comprenant:
- un premier capteur; et
- un deuxième capteur;
le capteur inertiel étant caractérisé en ce qu'il comprend en outre une structure de couplage en rotation autour d'un axe Z, et configurée pour opérer une transmission de mouvement entre respectivement :
∘ le premier capteur au moyen d'une première masse d'excitation ayant un premier degré de liberté, avantageusement en translation, selon un premier axe d'excitation dans un plan XY perpendiculaire à l'axe Z; et
∘ le deuxième capteur au moyen d'une deuxième masse d'excitation ayant un deuxième degré de liberté, avantageusement en translation, selon un deuxième axe d'excitation du plan XY.

Suivant un mode de réalisation, l'invention peut présenter un aspect où le deuxième axe d'excitation de la deuxième masse d'excitation est différent ou identique au premier axe d'excitation de la première masse d'excitation.

Ainsi, on peut tirer profit d'une mutualisation de moyens pour réaliser le mouvement d'excitation de plusieurs capteurs.

### Brève description des figures

La présente invention sera mieux illustrée à l'aide de la description détaillée des modes de réalisation qui peuvent être combinés et qui sont représentés par les dessins d'accompagnement non limitatifs suivants dans lesquels :
La figure 1 montre un exemple de repère d'axes orthogonaux XYZ dans lequel le dispositif de la présente invention peut être décrit dans son fonctionnement.
La figure 2 montre une vue en perspective d'une structure de couplage de la présente invention qui comprend un gyroscope à disque oscillant muni de plusieurs couronnes qui permettent une détection des forces de Coriolis à l'aide de jauges.
La figure 3 illustre une paire de jauges piézo-résistives montées en mode différentiel pour mesurer des forces de Coriolis orientées selon l'axe Z.
La figure 4 illustre un schéma d'une structure gyroscope en dual-mass couplée en détection par l'intermédiaire d'une barre en rotation autour d'un axe parallèle à l'axe de détection.
La figure 5 illustre un schéma d'une structure accéléromètre dit dynamique en dual-mass couplée en détection par l'intermédiaire d'une barre en rotation autour d'un axe orthogonal à l'axe de détection.
La figure 6A illustre un exemple de ressort pouvant connecter les couronnes d'excitation d'un gyroscope à disque oscillant et d'un accéléromètre /gyroscope à mouvement d'excitation linéaire.
La figure 6B montre un schéma de principe d'un capteur 6 axes selon la présente invention avec un capteur gyroscope central en mouvement de rotation autour de l'axe Z et des capteurs accéléromètres dynamiques et gyroscopes en mouvement linéaire en dual-mass.
La figure 6C montre une simulation du mode de déformation en excitation où le capteur central a un mouvement de rotation autour de l'axe Z et les capteurs latéraux ont des mouvements linéaires en dual-mass dans plusieurs directions du plan.
La figure 7 montre une structure de capteurs 6 axes de la présente invention avec le détail de la structure mécanique où les couplages entre masses des dual-mass sont forts en excitation et en détection.
La figure 8A montre un schéma de principe d'un capteur 6 axes selon la présente invention avec un capteur gyroscope central en mouvement de rotation autour de l'axe Z et des capteurs latéraux en mouvement translatoire mono-mass.
La figure 8B montre une simulation du mode propre de déplacement en excitation où le capteur central a un mouvement de rotation autour de l'axe Z et les capteurs latéraux ont des mouvements linéaires dans plusieurs directions du plan.
La figure 9A montre un schéma de principe d'un capteur 6 axes selon la présente invention avec des capteurs en mouvement translatoire mono-mass dans un mode d'opération muni de 2 gyroscopes à disques oscillants couplés entre eux.
La figure 9B montre une simulation du mode propre de déplacement en excitation où les deux capteurs gyroscopes centraux ont un mouvement de rotation autour de l'axe Z et les capteurs latéraux ont des mouvements linéaires en mono-mass dans plusieurs directions du plan.

### Description détaillée des modes de réalisation de l'invention

Avant de présenter des modes de réalisation en référence aux dessins, on indique que, suivant des modes de réalisation optionnels, l'invention peut présenter les aspects suivants qui peuvent être mis en oeuvre seuls, ou suivant toute combinaison:
La structure de couplage comporte un élément oscillant dont les oscillations dans le plan XY autour de l'axe Z lui sont transmises par l'énergie cinétique d'excitation d'un excitateur.

Le premier capteur est un accéléromètre dynamique comprenant :
- la première masse d'excitation couplée à la structure de couplage;
- une première masse de détection solidaire du mouvement de la première masse d'excitation et mobile selon une direction perpendiculaire au premier axe d'excitation; et
- un détecteur configuré pour détecter une accélération lors de déplacements de la première masse de détection suivant la direction perpendiculaire au premier axe d'excitation.

Le détecteur peut comprendre un élément de transmission (par exemple un bras de transmission) solidaire du mouvement de la première masse de détection suivant la direction perpendiculaire au premier axe d'excitation mais pas selon le premier axe d'excitation et au moins une jauge de mesure des efforts subis par l'élément de transmission via par exemple une barre ancrée au substrat par un pivot.

Selon un mode de réalisation alternatif du précédent, à la place d'une jauge de mesure, le détecteur peut comporter des électrodes capacitives de mesure du déplacement de l'élément de transmission.

Par ailleurs, la première masse de détection peut comprendre deux masses d'inertie individuelles configurées pour filtrer les mouvements générés par des forces de Coriolis en cas de rotation.

Les masses d'inertie peuvent être couplées de sorte à présenter des mouvements en phase selon le premier axe d'excitation.

Par ailleurs, le deuxième capteur est un gyroscope comprenant :
- la deuxième masse d'excitation couplée à la structure de couplage;
- une deuxième masse de détection mobile selon une direction perpendiculaire au deuxième axe d'excitation; et
- un détecteur configuré pour détecter une force de Coriolis donnant lieu à un déplacement de la deuxième masse de détection selon la direction perpendiculaire au deuxième axe d'excitation.

Le détecteur peut comprendre un élément de transmission (par exemple un bras de transmission) solidaire du mouvement de la deuxième masse de détection suivant la direction perpendiculaire au deuxième axe d'excitation mais pas selon le deuxième axe d'excitation ; cet élément de transmission est ancré au substrat par l'intermédiaire d'une liaison pivot (par exemple une barre ancrée par un pivot) et contient des moyens de mesure pouvant être, de manière non limitative, au moins une jauge de mesure des efforts subis par l' élément de transmission ou des électrodes capacitives de mesure du déplacement de l élément de transmission.

Dans un autre mode de réalisation, la deuxième masse de détection peut comprendre deux masses d'inertie individuelles configurées pour filtrer les mouvements d'accélération.

Les masses d'inertie sont couplées de sorte à présenter des mouvements en opposition de phase selon le deuxième axe d'excitation.

Dans un autre mode de réalisation, l'élément oscillant peut comprendre un gyroscope à disque oscillant dans le plan XY ayant un degré de liberté en rotation autour de l'axe Z et comprenant :
- une couronne centrale couplée à une couronne extérieure d'excitation formant au moins partiellement la structure de couplage, la couronne centrale ayant au moins un degré de liberté en rotation autour d'un premier axe du plan XY et transmettant au moins en partie une force de Coriolis pour mesurer un mouvement de rotation suivant un deuxième axe du plan XY, perpendiculaire au premier axe; et dans lequel la couronne extérieure d'excitation est couplée aux masses d'excitation du premier capteur et du deuxième capteur pour leur transmettre des mouvements d'excitation linéaire dans le plan XY.

Le gyroscope à disque oscillant dans le plan XY peut comprendre en outre :
- une couronne intermédiaire soumises à la force de Coriolis, et configurée pour transmettre au moins en partie une force de Coriolis à la couronne centrale sans transmettre au moins en partie les oscillations de la couronne extérieure d'excitation pour assurer un découplage entre excitation et détection.

Dans un autre mode de réalisation, la structure de couplage peut comporter au moins deux disques oscillants en rotation autour d'un axe Z et couplés entre eux par leurs circonférences.

La structure de couplage peut aussi comporter, pour chacun des premier et deuxième capteurs, une liaison configurée pour transformer le mouvement de rotation autour de l'axe Z de la structure de couplage en mouvement de translation dans le plan XY.

Dans un autre mode de réalisation, le capteur inertiel peut comprendre un nombre arbitraire de capteurs additionnels, la structure de couplage étant configurée pour opérer une transmission de mouvement avec les capteurs additionnels.

Dans un autre mode de réalisation, l'excitateur peut comprendre :
- des électrodes d'excitation de la première masse d'excitation ;
- des électrodes d'excitation de la deuxième masse d'excitation ; et/ou
- des électrodes d'excitation de la structure de couplage.

Dans un mode de réalisation, l'excitateur est configuré pour exciter au moins deux parmi : la structure de couplage, la première masse d'excitation et la deuxième masse d'excitation, et dans lequel l'excitateur comporte un circuit d'asservissement.

Dans le cadre de la présente invention, on souhaite associer et faire fonctionner ensemble c'est-à-dire dans une même électronique plusieurs capteurs et notamment au moins un accéléromètre et un autre capteur tel un gyroscope et éventuellement plusieurs accéléromètres et gyroscopes. La présente invention permet de relier par une structure de couplage au moins un accéléromètre avec d'autres structures soit accéléromètres soit gyroscopes.

Il est à noter que le mode de fonctionnement des accéléromètres MEMS diffère sensiblement de celui des gyroscopes MEMS classiques. En effet, pour un accéléromètre, il n'y a pas usuellement de boucle d'excitation et les mouvements en détection sont à basse fréquence. Aussi, selon l'invention, afin de faire fonctionner ensemble les accéléromètres et gyroscopes, il y a eu lieu d'apporter certains ajustements et modifications tels que ceux décrits dans le document de brevet FR2957414-A1.

En réalisant une puce associant à la fois gyroscopes et accéléromètres, il est possible d'effectuer des détections et des mesures jusqu'à 6 axes c'est à dire 3 axes accéléromètre, 3 axes gyroscope, et de gérer le capteur par une seule et unique électronique n'utilisant qu'une seule boucle d'asservissement en excitation et qu'un seul élément de lecture pour tous les axes. Il peut en résulter éventuellement des redondances de lecture. Par ailleurs, à travers ce dispositif et procédé, il est possible de mesurer chaque axe indépendamment des autres, et en particulier de détecter/distinguer des rotations le mieux possible des accélérations et inversement.

Pour détecter jusqu'à 3 axes d'accélération et de rotation, on utilise plusieurs directions d'excitation dans le plan du substrat. On choisit avantageusement une structure de couplage qui permet justement un couplage fort des mouvements d'excitation des différents accéléromètres et gyroscopes.

Une telle structure de couplage peut être constituée d'un disque en rotation autour de l'axe Z. La forme de disque n'est pas limitative, mais il est préféré que le seul degré de liberté de cette structure soit en rotation autour de l'axe Z. La structure de couplage comporte avantageusement un élément oscillant qui peut avoir la forme d'un disque. On entend par disque tout élément dont la circonférence est circulaire ou en portion de cercle (c'est-à-dire correspondant à un secteur angulaire d'un disque complet). Le disque peut être plein ou présenter des trous, par exemple un trou central délimitant un pourtour annulaire. Ce disque transmet par couplage fort un mouvement d'excitation dans plusieurs directions du plan à plusieurs autres capteurs qui sont connectés à sa périphérie, ces derniers capteurs utilisant un mouvement d'excitation généralement linéaire dans le plan. Ces derniers capteurs disposent également d'une masse d'excitation n'ayant qu'un degré de liberté selon la direction d'excitation et sont connectés par leur masse d'excitation au disque oscillant par l'intermédiaire d'une liaison rigide dans la direction d'excitation. Cette liaison assure avantageusement la transformation de la rotation du disque en mouvement de translation de la masse d'excitation. Dans d'autres cas cependant, le disque peut transmettre un mouvement de rotation, à un gyroscope à disque oscillant par exemple.

Sans rentrer dans les détails, la structure de couplage en disque oscillant peut être incorporée, au moins partiellement, dans un gyroscope dit « gyroscope à disque oscillant » qui a sensiblement une forme de disque, utilise un mouvement d'excitation en rotation autour de l'axe Z et permet de mesurer un ou 2 axes de rotation dans le plan du substrat. Ce gyroscope est constitué d'une partie externe dite couronne d'excitation qui n'a qu'un degré de liberté en rotation autour de l'axe Z et auquel sont rattachées les masses d'excitation des capteurs utilisant un mouvement d'excitation linéaire dans le plan.

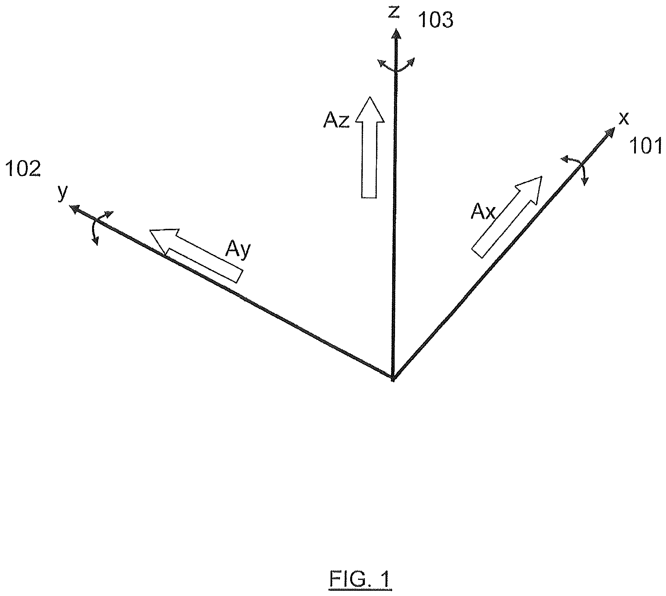

La **figure 1** montre un exemple de repère d'axes orthogonaux XYZ dans lequel le dispositif de la présente invention peut être décrit dans son fonctionnement. Les mouvements suivant les axes X101 Y102 et Z103 sont respectivement notés AX, AY et AZ. Les rotations selon les axes X101 Y102 et Z103 sont également représentées par des flèches.

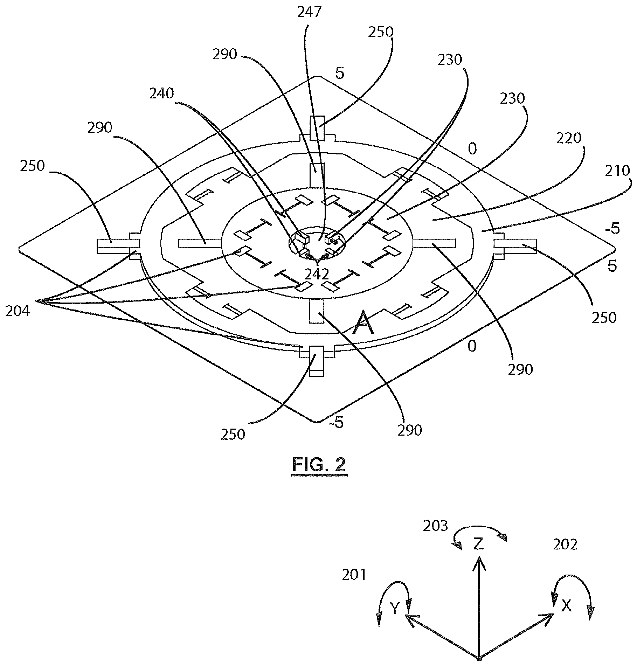

La **figure 2** illustre une structure de couplage 200 capable d'être utilisée dans un dispositif selon l'invention.

A titre d'exemple, un gyroscope à disque oscillant participant à la fois à la détection et à la structure de couplage est décrit. Le gyroscope possède une couronne d'excitation n'ayant qu'un degré de liberté en rotation autour d'un axe Z. Tout autre type de disque peut être utilisé et qu'importe sa forme du moment que sa structure présente un axe de rotation.

Plus en détail, la figure 2 montre une vue en perspective d'une structure de couplage plan de cette première mise en oeuvre de l'invention. La structure de couplage 200 est composée de trois masses sismiques distinctes permettant une détection des forces de Coriolis générées selon deux axes orthogonaux de rotation du capteur et se situant dans le plan du substrat. L'agencement des trois masses avec l'utilisation de jauges piézo-résistives suspendues assure un découplage complet des mouvements oscillants d'excitation du capteur qui ne sont pas transmis aux jauges afin qu'elles puissent mesurer précisément les seuls mouvements de compression et d'extension (ou traction) auxquelles elles sont soumises par les forces de Coriolis résultant des rotations du capteur selon les deux axes possibles de détection.

Les différents mouvements des trois masses du capteur 200 sont décrits ci-après selon le système référentiel tridimensionnel classique dans lequel le plan du capteur est ici défini par les axes notés X 201 et Y 202. La troisième dimension, hors plan, est l'axe Z 203. L'énergie cinétique d'excitation est communiquée à la structure de couplage 200 sous forme d'oscillations dans le plan XY, autour de l'axe Z, comme indiqué au repère 203. L'élément d'excitation est une première masse qui reçoit cette excitation par des moyens classiques dont un exemple est donné plus loin. La première masse prend dans cet exemple la forme d'une couronne extérieure, aussi appelé couronne d'excitation, 210 qui est rendue libre d'osciller dans le seul plan XY autour de l'axe Z par les ressorts 250, dans cet exemple au nombre de quatre. Les ressorts 250 sont conçus pour donner à la première masse un seul degré de liberté de mouvement, en rotation, autour de l'axe Z 203.

Le mouvement d'excitation oscillant du capteur est transmis à la couronne intermédiaire, aussi appelée couronne de détection 220, constituant une autre masse. Elle est rigidement liée à la couronne extérieure selon le mouvement d'excitation et a donc aussi un mouvement autour de l'axe Z. Des ressorts gravés dans le plan de la couronne intermédiaire, décrits ci-après, confèrent cependant à celle-ci deux degrés supplémentaires de liberté de mouvement en oscillation autour des axes X 202 et Y 201.

Enfin une autre masse, sous forme de couronne centrale 230 peut être ancrée en rotation selon Z et ne peut donc suivre les mouvements oscillants d'excitation communiqués aux couronnes extérieure 210 et intermédiaire 220. Elle ne peut donc être sensible qu'aux mouvements résultants des forces de Coriolis et a donc à cet effet deux degrés de liberté de mouvement en oscillation autour des axes X et Y avec les moyens décrits dans les figures suivantes ; les mouvements dus à la force de Coriolis sont transmis par les ressorts 290. La couronne centrale 230 et la couronne extérieure 210, qui ne sont pas libres de tous leurs mouvements, ont des points d'ancrage 204 à un substrat fixe non représenté sur cette figure. Ils sont décrits et indiqués plus précisément ci-après.

Les contraintes dues aux forces de Coriolis sont transmises aux jauges piézo résistives, ici par quatre poutres 240 disposées à la périphérie intérieure de la couronne centrale 230 formant ainsi un élément de détection des oscillations selon les deux axes X et Y au niveau d'un trou 247. Des jauges 242 sont d'un côté connectées aux poutres 240 solidaires de la couronne centrale 230 et de l'autre côté ancrées au substrat par exemple semi conducteur situé dans la partie fixe et à un plot de contact individuel permettant la mesure de la résistance électrique de chaque jauge qui est dans le cas présent une jauge piézo-résistive.

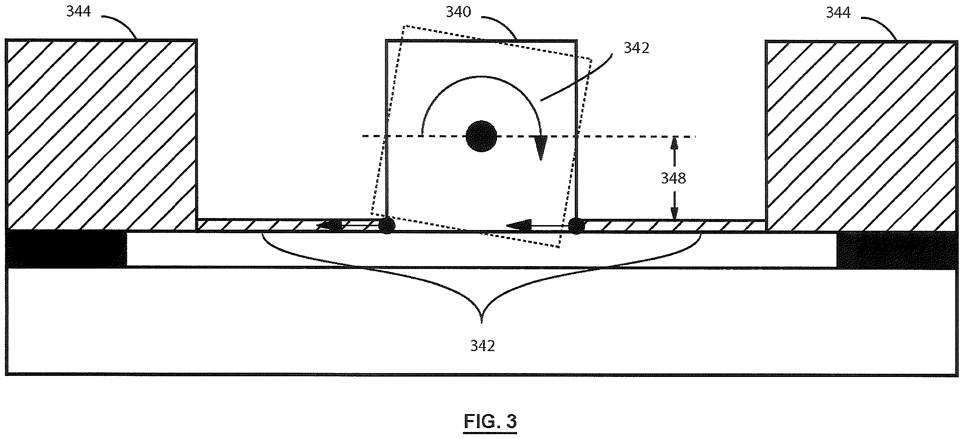

Préférentiellement, l'épaisseur (suivant la direction Z, mais de préférence aussi la largeur orthogonale à la direction du mouvement rotationnel à détecter) de la ou des jauges est comprise entre quelques dizaines de nanomètres et quelques micromètres, par exemple 1 µm ou 2 µm ou 10 µm. Un exemple d'épaisseur est de 40nm pour une jauge de contrainte suspendue en silicium cristallin. De préférence, l'épaisseur e est très petite devant d (e<<d, soit e<d/10 ou e<d/20), d étant la distance entre l'axe d'oscillation de la masse de détection 230 suivant la direction du mouvement rotationnel comme illustré au repère 348 en figure 3 et son plan inférieur en vis-à-vis du substrat.

L'avantage de ce capteur est le découplage entre excitation et détection. En effet, la couronne externe ne bouge que selon la direction d'excitation et pas (ou très peu) selon la direction de détection. La couronne d'excitation transmet tout ou partie du mouvement d'excitation à une 2^{e} couronne qui a aussi un degré de liberté en détection et bouge selon ce degré de liberté lorsqu'il est soumis à une force de Coriolis. Une couronne centrale est ancrée en excitation et bouge en détection de manière solidaire avec la 2^{e} couronne.

Bien que l'exemple ci dessus soit décrit pour une double détection suivant X et Y, le gyroscope oscillant peut aussi n'opérer que la détection d'un seul axe parmi X et Y.

**La** **figure 3** montre schématiquement une paire de jauges piézo-résistives 342 qui sont avantageusement montées en mode différentiel, ce qui permet de s'affranchir des déformations parasites identiques qui affectent les deux bras pour mieux mesurer les variations opposées de résistance dues à la compression d'un bras et à l'extension de l'autre en raison de la rotation d'une poutre 340 sous l'action des forces de Coriolis transmises à la couronne centrale 230 et aux poutres 340. Comme dans la figure 2, les jauges 342 sont d'un côté connectées aux poutres 340 solidaires de la couronne centrale et de l'autre côté ancrées au substrat 344.

Le décalage 348 suivant l'axe Z par rapport à l'axe de rotation 349 de la troisième masse, la couronne centrale 230, réalise un bras de levier qui amplifie les contraintes engendrées par les mouvements d'oscillation. L'axe de rotation 349 est au milieu de la couche épaisse constituant la partie oscillante. Ainsi lors d'une rotation, par exemple autour de l'axe X, la force de Coriolis induite dans la troisième masse génère une contrainte en tension/compression sur les jauges 342 orientées suivant l'axe X, due à une oscillation des masses de détection suivant l'axe Y.

Les jauges piézo-résistives 342 sont de préférence de section la plus faible possible. Elles ont typiquement une section de l'ordre inférieure au micron afin d'avoir une concentration de contrainte dans la jauge aussi élevée que possible et ainsi amplifier les effets piézo-résistifs.

Comme mentionné auparavant, il est avantageux de positionner les jauges 342 de manière à minimiser les interférences entre les axes de rotation dont les détections peuvent idéalement rester indépendantes. Lorsqu'une rotation est détectée, par exemple selon X, le capteur inertiel (ou plus précisément la ou les masses de détection) oscille autour de l'axe Y et met en tension/compression les jauges associées à cet axe de détection. La contrainte en tension/compression sur ces jauges entraîne une modification de leur résistivité, ce qui permet de remonter à la force de Coriolis. Cependant, lors de ce mouvement, les jauges associées à la détection des rotations selon Y peuvent subir un mouvement vertical si elles ne sont pas au centre de la structure (le mouvement est seulement un mouvement de torsion si les poutres 340 sont parfaitement au centre). Ce mouvement vertical les déforme en flexion ce qui peut avoir une faible incidence sur les variations de résistivité de la jauge. En outre, les jauges sont déformées de la même manière en flexion, alors qu'elles sont déformées de manière différentielle lors de la détection d'une rotation. Il est avantageux de les mettre le plus possible au centre afin que cette déformation parasite en flexion :
- ne compromette pas l'intégrité de la jauge qui peut casser en cas de déformation trop importante ;
- génère un signal parasite le plus petit possible ; et
- ait une incidence la plus limitée possible sur la sensibilité lorsqu'il faut détecter des composantes de rotation selon les deux axes.

Enfin, les jauges 342 sont aussi préférentiellement disposées de manière différentielle et symétrique par rapport aux axes de rotation des modes de détection. Ceci afin que la raideur des jauges associées à un axe ne vienne perturber de manière dissymétrique le mouvement de détection selon l'autre axe, ce qui entraînerait un couplage entre modes et une interférence entre axes.

Pour minimiser la déformation en flexion des jauges 342, il peut être intéressant d'asservir le capteur inertiel en détection. Cela n'élimine pas la problématique des interférences entre axes mais réduit les risques de cassure et de comportement non linéaire.

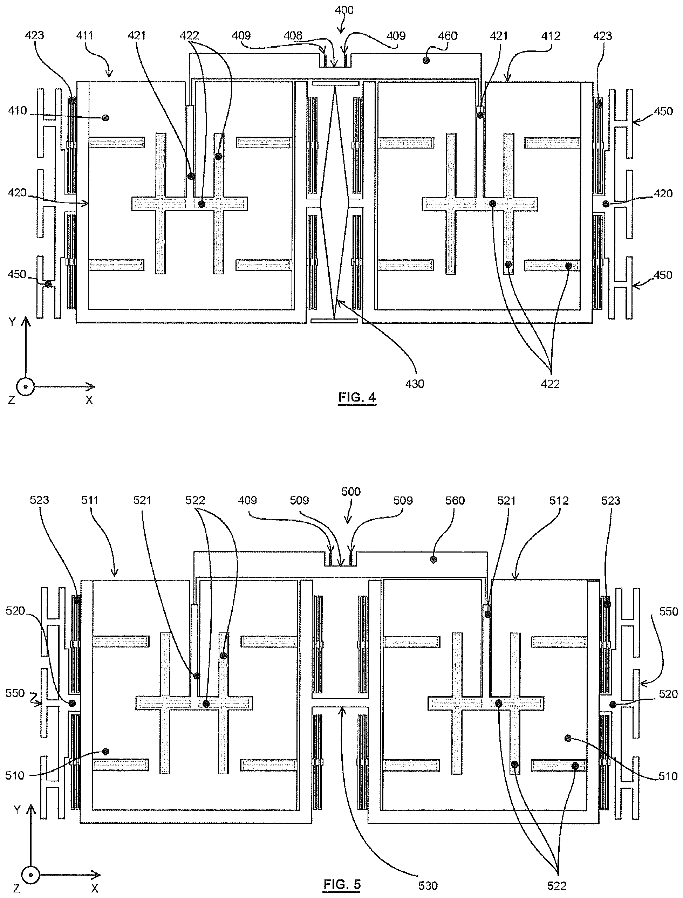

**La** **figure 4** montre un exemple de mode réalisation d'un capteur gyroscope ou gyromètre 400 qui peut être associé au système de capteur inertiel à disque oscillant de la figure 2.

Les capteurs associés au système de capteur inertiel à disque oscillant peuvent avoir pour caractéristique un découplage entre excitation et détection. Ils sont en particulier composés d'un cadre ou d'une masse externe qui ne bouge que selon la direction d'excitation et pas (ou très peu) selon la direction de détection. Ce cadre ou masse d'excitation transmet tout ou partie du mouvement d'excitation à un deuxième cadre ou masse qui a aussi un degré de liberté en détection et bouge selon ce degré de liberté. Des cadres ou masses supplémentaires sont possibles, par exemple un cadre ou une masse qui est ancré(e) en excitation et bouge en détection de manière solidaire avec le 2^{e} cadre/masse.

Les gyroscopes peuvent être des gyroscopes GZ (mesure de rotation suivant Z excitation selon X, détection selon Y ou inversement), des gyroscopes GX (mesure de rotation suivant X excitation selon Y, détection selon Z) ou GY (mesure de rotation suivant Y excitation selon X, détection selon Z), mais dans ces 2 derniers cas, il y aurait redondance avec le gyroscope X/Y à disque oscillant.

Pour qu'ils soient fortement insensibles aux sollicitations parasites, ces capteurs peuvent être préférentiellement, mais pas obligatoirement, des « dual-mass », ce qui permettra de distinguer dans chaque cas les signaux dus aux accélérations de ceux dus aux rotations.
Les 2 masses des gyroscopes dual-mass sont actionnées en opposition de phase.

Dans un mode de réalisation, les parties détection de chaque gyroscope dual-mass sont couplées. Il peut s'agir d'un couplage faible ou fort. Un couplage fort peut par exemple être réalisé par l'intermédiaire d'une barre rigide en rotation autour d'un axe parallèle à l'axe de détection. Ce type de couplage n'est pas obligatoire, mais permet de réduire très fortement la sensibilité des gyroscopes aux accélérations. A noter que dans le cadre du gyroscope X/Y à disque oscillant de la figure 2, il y a naturellement un couplage fort en détection.

Un exemple de gyromètre 400 en dual-mass est illustré en détail dans la figure 4. Le gyroscope 400 est composé de deux masses d'inertie mobiles 411 et 412 couplées par un ressort de couplage en anti-phase 430. L'oscillation d'excitation par translation suivant X engendre, lors d'un mouvement de rotation suivant Z, une force de Coriolis suivant Y.

Dans cet exemple, les deux masses mobiles 411 et 412 sont reliées d'une part par une le ressort de couplage en anti-phase 430 et d'autre part par une barre de couplage fort en détection 460 en rotation autour d'un axe parallèle à l'axe de détection. Sur la barre de couplage fort 460, se trouve une charnière 408 d'axe Z. Cet axe de pivot Z peut être situé proche du centre de gravité de la structure des deux masses mobiles. Par conséquent, le gyromètre 400 présente une structure équilibrée au repos, ce qui le rend peu sensible à la composante quasi-statique de l'accélération. Une paire de jauges piézo-résistives 409 est fixée de part et d'autre de la charnière 408 sur la barre de couplage 460.

Dans un autre exemple, la barre de couplage fort 460 peut être remplacée par un moyen de couplage faible, mais dans ce cas, la sensibilité aux accélérations est peu réduite.

La vitesse de rotation du gyromètre 400 autour de l'axe Z est mesurée par la force de Coriolis suivant Y résultant de l'oscillation permanente communiquée aux masses d'inertie mobiles 411 et 412 selon l'axe perpendiculaire, c'est-à-dire l'axe X. A chacune des deux masses d'inertie mobiles 411 et 412 est associée une partie de la masse d'excitation, par exemple une masse ou un cadre d'excitation 420 en forme d'U qui entoure chacune une masse ou un cadre de détection 410. Les deux masses d'excitation 420 peuvent comporter des supports d'électrode d'excitation 450 de part et d'autre des deux masses mobiles 411 et 412 et sont reliées au substrat par l'intermédiaire des ressorts 423 qui peuvent par exemple des ressorts en U.

Les deux masses d'excitation 420 entrainent les masses mobiles 411 et 412, à l'aide d'un ressort de couplage 430, dans des mouvements en opposition de phase de telle façon que le déplacement des masses mobiles 411 et 412 se fasse dans des directions, selon l'axe X, toujours opposées. Le ressort de couplage 430 possède des points d'ancrage qui se trouvent aux extrémités des poutres horizontales reliés aux coins du losange en haut et en bas de la structure de couplage. Le rôle du ressort de couplage 430 est de contraindre ces déplacements dans des directions opposées des 2 masses d'inertie mobiles 411 et 412. La structure du ressort de couplage anti-phase 430 lui impose de se mouvoir en opposition de phase, d'où son nom de ressort de couplage en anti-phase. Un déplacement selon x d'un côté du losange impose un déplacement selon y sur les poutres horizontales encastrées à leurs extrémités et ce mouvement selon y impose un déplacement selon x de valeur opposé de l'autre côté de la structure de couplage.

Dans l'exemple de la figure 4, la détection de déplacements générés par une force de Coriolis issue de rotations autour de l'axe Z, se fait par l'intermédiaire des deux cadres de détection 421 ancrés selon le mouvement d'excitation et transmettant la force de Coriolis généré sur le cadre 410 à la barre de couplage 460. Une paire de jauges piézo-résistives peut être fixée de part et d'autre du point de pivot 408 sur la barre de couplage 460. Chacun des deux cadres 421 est connecté à chacune des deux masses d'inertie mobiles 411 et 412 à l'aide des ressorts 422 arrangés pour ne transmettre à celui-ci que les mouvements selon l'axe Y. Les ressorts 422 sont avantageusement du type replié. Si le capteur est monomasse, un seul bras 421 sera mis en oeuvre.

D'une manière générale, l'invention met à profit l'emploi avantageux d'au moins un accéléromètre dit dynamique. Dans ce type de capteur, une excitation est transmise à une masse composant l'ensemble sismique du capteur de sorte à produire une oscillation qui déplace le centre de gravité de l'ensemble sismique. On fait ainsi varier la distance entre le point de pivot autour duquel une partie de capteur est mobile sous l'effet d'une force due à l'accélération et le point d'application de cette force. Des parasites à la mesure, notamment le bruit en 1/f, sont filtrés. Un tel capteur est donc particulièrement avantageux dans l'invention car il fonctionne avec une excitation, comme pour un gyromètre. L'excitation a ici pour objet de modifier la position du centre de gravité de l'ensemble sismique (ici masse d'excitation et de détection) au cours du temps, avec un mouvement vibratoire de fréquence déterminée.

**La** **figure 5** représente un exemple d'accéléromètre 500 en dual-mass c'est-à-dire que l'accéléromètre comporte deux masses d'inertie mobiles 511 et 512.

De même que pour les capteurs gyroscopes précédemment décrits, les capteurs accéléromètres associés au système de capteur inertiel à disque oscillant peuvent avoir la caractéristique d'avoir un découplage entre excitation et détection et ils sont en particulier composés d'un cadre ou d'une masse par exemple externe qui ne bouge que selon la direction d'excitation et pas (ou très peu) selon la direction de détection. Ce cadre ou masse d'excitation transmet tout ou partie du mouvement d'excitation à un 2^{e} cadre ou masse qui a aussi un degré de liberté en détection et bouge selon ce degré de liberté lorsque soumis à une force de Coriolis. Des cadres ou masses supplémentaires sont possibles, par exemple un cadre ou une masse qui est ancré(e) en excitation et bouge en détection de manière solidaire avec le 2^{e} cadre/masse.

Pour qu'il soit fortement insensible aux sollicitations parasites, le capteur peut être préférentiellement, mais pas obligatoirement, en « dual-mass » comme il est illustré sur cette figure, ce qui permettra de distinguer dans chaque cas les signaux dus aux accélérations de ceux dus aux rotations. Les 2 masses de l'accéléromètre dual-mass sont actionnées en phase. Dans un mode de réalisation, les 2 parties de détection de chaque accéléromètre dual-mass sont couplées par l'intermédiaire d'une barre rigide en rotation autour d'un axe orthogonal à l'axe de détection.

Les accéléromètres peuvent être des accéléromètres AX (mesure d'accélération suivant X, excitation selon Y, détection en rotation autour de Z), AY (mesure d'accélération suivant Y, excitation selon X, détection en rotation autour de Z) ou AZ (mesure d'accélération suivant Z, excitation selon Y, détection en rotation autour de X ou inversement).

Dans cet exemple, les deux masses d'inertie mobiles 511 et 512 sont couplées d'une part par un ressort de couplage en phase 530 et d'autre part par une barre de couplage fort en détection 560 en rotation autour d'un axe orthogonal à l'axe de détection. Sur la barre de couplage 560, se trouve une charnière 508 d'axe Z. Cet axe de pivot Z peut être situé proche du centre de gravité de la structure composée des deux masses mobiles. Par conséquent, l'accéléromètre présente une structure équilibrée au repos, ce qui le rend peu sensible à la composante quasi-statique de l'accélération. Ainsi, cet accéléromètre présente l'avantage d'être peu influencé par la force de Coriolis et par la composante quasi-statique de l'accélération. Une paire de jauges piézo-résistives 509 est fixée de part et d'autre de la charnière 508 sur la barre de couplage 560.

Chacune des deux masses d'inertie mobiles 511 et 512 comprend une masse ou un cadre d'excitation 520 en forme d'U qui entoure chacune une masse ou un cadre de détection 510. Les deux masses d'excitation 520 comportent des supports d'électrode d'excitation 550 de part et d'autre des deux masses mobiles 511 et 512 et sont reliées au substrat par l'intermédiaire des ressorts 523 qui peuvent par exemple des ressorts en U. On verra plus loin que l'excitation peut aussi être générée à d'autres emplacements.

Les deux masses d'excitation 520 entrainent les masses mobiles 511 et 512, dans des mouvements en phase de telle façon que le déplacement des masses mobiles 511 et 512 se fasse dans des directions, selon l'axe X, dans les mêmes sens. Le rôle du ressort de couplage 530 est de faire déplacer dans les mêmes directions les 2 masses d'inertie mobiles 511 et 512.

Dans l'exemple de cette figure, la détection de ces déplacements, ici une rotation autour de la charnière 508 selon l'axe Z, se fait par l'intermédiaire des deux éléments de transmission 521 ancrés selon le mouvement d'excitation et transmettant la force d'accélération générée sur le cadre 510 à la barre de couplage 560. Une paire de jauges piézo-résistives peut être fixée de part et d'autre du point de pivot 508 sur la barre de couplage 560. Chacun des deux bras 521 est connecté à chacune des deux masses d'inertie mobiles 511 et 512 à l'aide des ressorts 522 arrangés pour ne transmettre à celui-ci que les mouvements selon l'axe Y. Les ressorts 522 sont avantageusement du type replié.

La barre de couplage 560 ne bouge qu'en rotation autour de la charnière 508. Les masses d'excitation en U 520 ne bouge qu'en excitation selon l'axe X. Ces masses d'excitation 520 entraînent avec elles les masses de détection 510 qui bougent en excitation selon X et en détection selon Y.

Dans un exemple de réalisation, l'accéléromètre peut comporter une seule partie mobile d'excitation et/ou une seule masse de détection.
L'exemple illustré d'un accéléromètre de mesure d'accélération suivant Y est transposable, mutatis mutandis, à une mesure dynamique suivant d'autres axes. De manière similaire, l'exemple de gyromètre de la figure 4 est transposable à d'autres axes de détection.

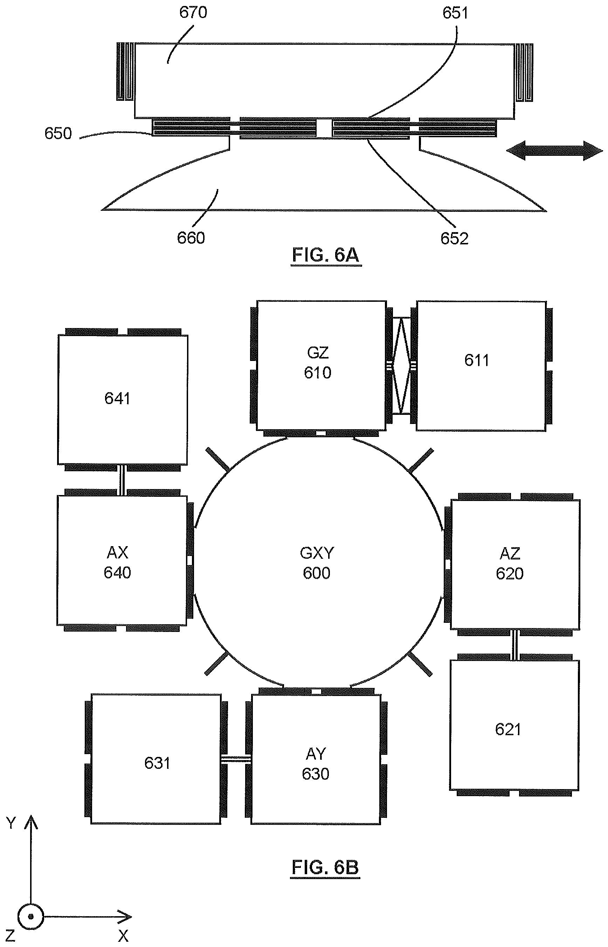

**La** **figure 6A** illustre un exemple de ressort pouvant connecter les couronnes d'excitation d'un gyroscope à disque oscillant et d'un accéléromètre /gyroscope à mouvement d'excitation linéaire.

Un type de ressort 650 pouvant être utilisé est le ressort en U qui est symétrique, l'un ou l'autre des deux cotés 651, 652 pouvant servir d'entrée ou de sortie. Ce ressort assure la transmission entre les masses d'excitation du gyroscope à disque oscillant 660 et l'ensemble des masses d'inertie comme par exemple un accéléromètre ou un gyroscope 670. La transmission peut se faire entre une entrée et une sortie.

**La** **figure 6B** montre un schéma de principe d'un capteur multiaxes et plus précisément 6 axes selon la présente invention avec un capteur gyroscope central GXY en mouvement de rotation autour de l'axe Z associant plusieurs capteurs accéléromètres dynamiques AX, AY et AZ en mouvement linéaire en dual-mass avec un capteur gyroscope GZ dual mass en mouvement linéaire.

Dans cet exemple, le capteur central est un capteur inertiel à disque oscillant GXY 600 ayant la fonction de couplages associant 3 capteurs accéléromètres dynamiques AX 640-641, AY 630-631 et AZ 620-621 en mouvement linéaire en dual-mass avec un capteur gyroscope GZ 610-611 en mouvement linéaire en dual mass. Les masses mobiles 640 et 641 de l'accéléromètre AX sont en phase, tout comme les masses mobiles 630 et 631 de l'accéléromètre AY sont en phase ainsi que les masses mobiles 620 et 621 de l'accéléromètre AZ sont en phase. Par contre les masses mobiles 610 et 611 du gyroscope GZ sont en opposition de phase car elles sont couplées par un ressort de couplage en anti-phase représenté par un losange.

A la différence des gyroscopes GZ, les gyroscopes à disque oscillant GXY possèdent un cadre d'excitation n'ayant qu'un degré de liberté en rotation autour de l'axe Z.

Les accéléromètres désignés par les références AX sont des accéléromètres en excitation selon l'axe Y 602 et en détection en rotation autour de l'axe Z 603. De même, les accéléromètres désignés par les références AY sont des accéléromètres en excitation selon l'axe X 601 et en détection en rotation autour de l'axe Z 603. Tout comme les accéléromètres désignés par les références AZ sont des accéléromètres en excitation selon l'axe Y 602 et en détection en rotation autour de l'axe X 601 ou inversement.

Les gyroscopes désignés par les références GZ sont des gyroscopes en excitation selon l'axe X 601 et en détection selon l'axe Y 602 ou inversement.

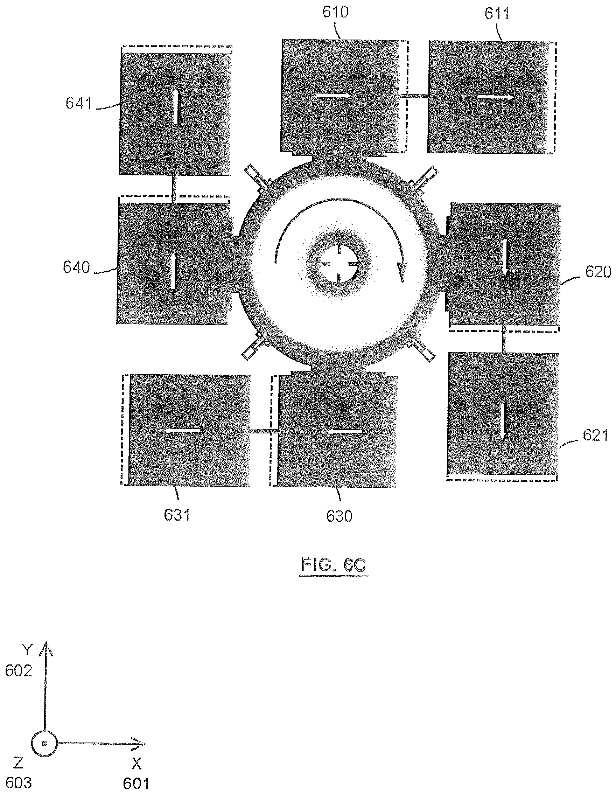

**La** **figure 6C** montre une simulation du mode de déformation ou de mouvement en excitation où le capteur central GXY a un mouvement de rotation autour de l'axe Z et les capteurs latéraux AX, AY, AZ et GZ ont des mouvements linéaires en dual-mass dans plusieurs directions du plan XY.

Dans cet exemple, les accéléromètres et gyroscopes sont les mêmes que ceux de la figure 6B. Les flèches représentent le sens des mouvements ou déformation des masses d'inertie des accéléromètres dynamiques AX 640-641, AY 630-631 et AZ 620-621 et du capteur gyroscope GZ 610-611 en mouvement linéaire en dual-mass.

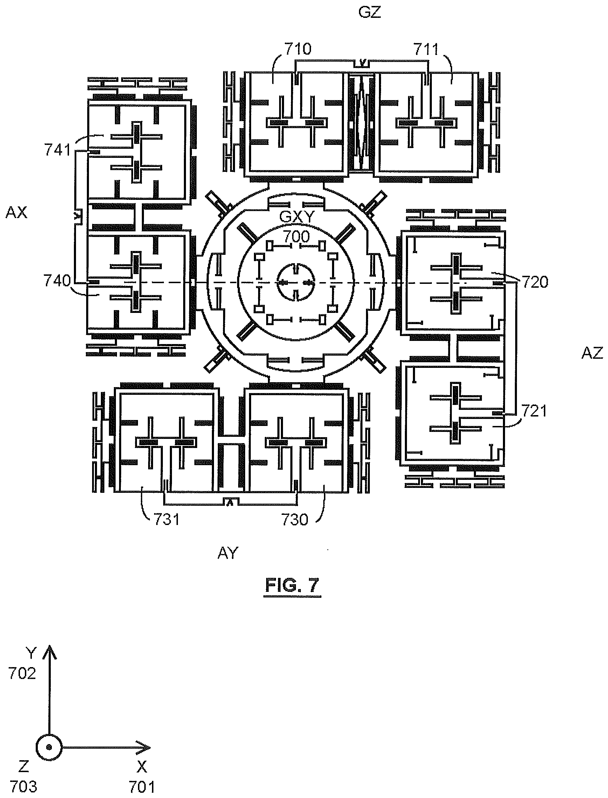

**La** **figure 7** montre une structure de capteurs 6 axes de la présente invention avec le détail de la structure mécanique où les couplages entre masses des dual-mass sont forts en excitation et en détection.

Plus spécifiquement, cette figure montre en détail la structure mécanique de liaison et de couplage entre les différentes masses d'inertie des accéléromètres dynamiques AX 740-741, AY 730-731 et AZ 720-721 du capteur gyroscope GZ 710-711 en mouvement linéaire en dual-mass et avec un capteur central gyroscope GXY 700 à disque oscillant en rotation autour de l'axe Z.

Les détails décrits dans les figures 3, 4 et 5 y figurent afin de mieux comprendre par exemple la détection des déplacements, des masses mobiles par l'intermédiaire des barres de couplage en détection qui peuvent pivoter en fonction des mouvements résultant de la force de Coriolis. Ces détections sont faites par les jauges piézo-résistives qui sont également représentées de part et d'autre du point de pivot sur chacune des barres de couplage.

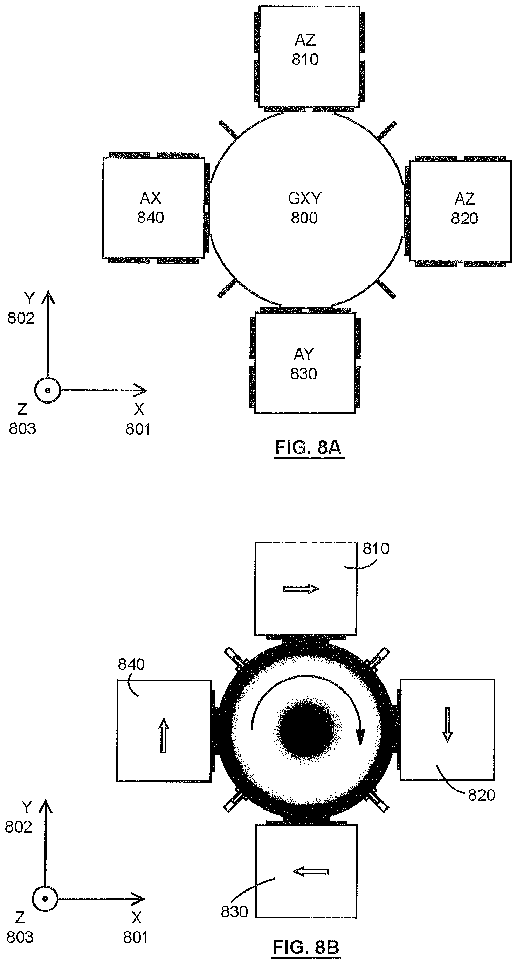

**La** **figure 8A** montre un schéma de principe d'un capteur 6 axes selon la présente invention avec un capteur gyroscope central en mouvement de rotation autour de l'axe Z et des capteurs latéraux en mouvement translatoire mono-mass.

Cette figure illustre un mode de réalisation simplifié des figures 6B, 6C et 7. L'accéléromètre désigné par la référence AX 840 est un accéléromètre en excitation selon l'axe Y 802 et en détection en rotation autour de l'axe Z 803. De même, l'accéléromètre désigné par la référence AY 830 est un accéléromètre en excitation selon l'axe X 801 et en détection en rotation autour de l'axe Z 803. Tout comme l'accéléromètre désigné par la référence AZ 820 est un accéléromètre en excitation selon l'axe Y 802 et en détection en rotation autour de l'axe X 801 ou inversement.

Le gyroscope désigné par la référence GZ est un gyroscope en excitation selon l'axe X 801 et en détection selon l'axe Y 802 ou inversement.

**La** **figure 8B** montre une simulation de la figure 8A du mode propre de déplacement en excitation où le capteur central a un mouvement de rotation autour de l'axe Z et les capteurs latéraux ont des mouvements linéaires dans plusieurs directions du plan.

D'une manière générale, ces directions peuvent être perpendiculaires entre elles selon l'invention.

Les flèches représentent le sens des mouvements ou déformation des masses d'inertie des accéléromètres dynamiques AX 840, AY 830 et AZ 820 et du capteur gyroscope GZ 810 en mouvement linéaire en mono-mass.

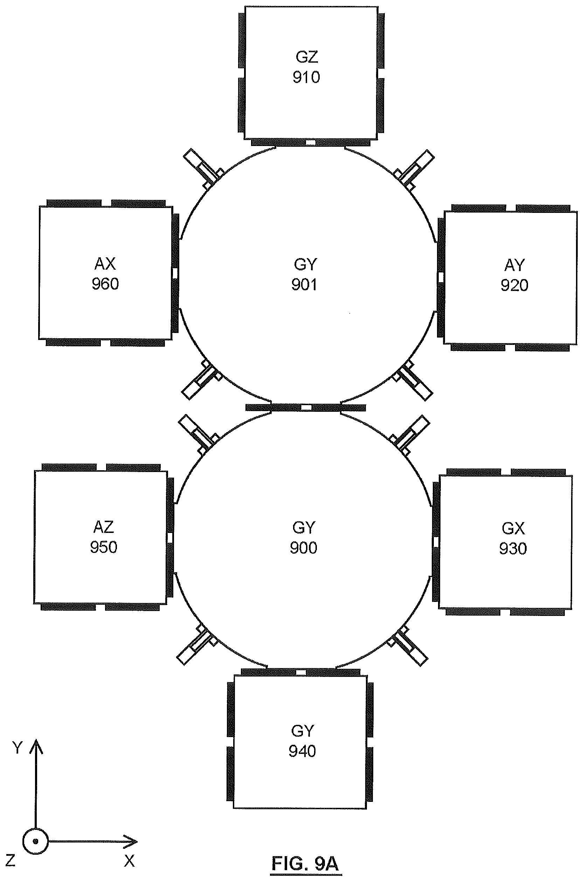

**La** **figure 9A** montre un schéma de principe d'un capteur 6 axes selon la présente invention avec des capteurs en mouvement translatoire mono-mass dans un mode d'opération où 2 gyroscopes à disques oscillants sont couplés entre eux et avec les capteurs.

Le gyroscope à disque oscillant GX 901 est par exemple un gyroscope en excitation autour de l'axe Z et en détection autour de l'axe Y. Le gyroscope GY 902 est un gyroscope en excitation autour de l'axe Z et en détection autour de l'axe X. Dans ces derniers cas, il y aurait redondance avec les gyroscopes périphériques 940, 930.

Les accéléromètres dans ce mode réalisation peuvent être des combinaisons de plusieurs types d'accéléromètres AX 960 (en excitation selon Y, en détection en rotation autour de Z), AY 920 (en excitation selon X, en détection en rotation autour de Z) ou AZ 950 (en excitation selon Y, en détection en rotation autour de X ou inversement).

De même, dans ce mode de réalisation, les gyroscopes peuvent être des combinaisons de gyroscopes GZ 910 (en excitation selon X, en détection selon Y ou inversement), des gyroscopes GX 930 (en excitation selon Y, en détection selon Z) ou GY 940 (en excitation selon X, en détection selon Z).

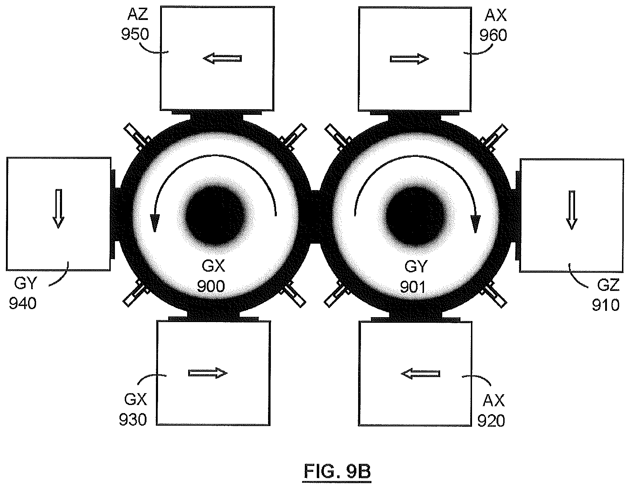

**La** **figure 9B** montre une simulation du mode propre de déplacement en excitation où les deux capteurs gyroscopes centraux ont un mouvement de rotation autour de l'axe Z et les capteurs latéraux ont des mouvements linéaires en mono-mass dans plusieurs directions du plan.

Dans cet exemple, les accéléromètres et gyroscopes sont les mêmes que ceux de la figure 9A. Les flèches représentent le sens des mouvements ou déformation des masses d'inertie des capteurs accéléromètres dynamiques AX 960, AY 920, AZ 950 et des capteurs gyroscopes GX 930, GY 940et GZ 910 en mouvement linéaire en mono-mass. Ces accéléromètres et gyroscopes sont entrainés par les mouvements de rotation des deux capteurs gyroscopes centraux à disques oscillants GX 900 et GY 901.

Dans tous les exemples donnés ci-dessus, on notera que les masses en mouvement des différents capteurs sont sensiblement orientées suivant le plan du substrat.

On notera que dans le cas de capteur à excitation linéaire, la structure de couplage assure une transformation de la rotation autour de Z en translation d'axe d'excitation X ou Y selon le cas, et inversement. Dans le cas d'un couplage avec un capteur à excitation en rotation, d'axe d'excitation autour de Z (gyroscope 900, 901), la liaison assurée par la structure de couplage est une transmission de rotation, autour du même axe.

Ainsi, la liaison entre capteurs et structures de couplage est adaptée au mode d'excitation nécessaire au fonctionnement de chaque capteur, soit excitation linéaire, soit excitation en rotation autour de Z.

Le mouvement d'excitation est ici globalement d'origine commune pour l'ensemble des capteurs. L'excitation utilisée pour générer l'oscillation d'excitation peut être de conception courante et peut comprendre un ou plusieurs organes d'excitation, préférentiellement électrostatiques sous forme d'électrodes ou de doigts interdigités. On y applique une tension pour provoquer le déplacement. Avantageusement, une seule commande suffit à l'ensemble de l'excitateur, pour tous les capteurs. Les organes d'excitation de l'excitateur peuvent indifféremment être placés à au moins l'un des endroits suivants : en périphérie de la structure de couplage (en particulier au niveau de la couronne d'excitation 210), au niveau d'un capteur périphérique ou de plusieurs. La fréquence d'excitation peut être, par exemple, compris entre 1 et 30kHz.

La chaîne de transmission de mouvement produit par la structure de couplage assure la mise en excitation de tous les capteurs, quelque soit le lieu d'origine de l'excitation.

Les avantages des modes de réalisation particuliers décrits selon la présente invention sont listés comme suit :
- capteur fortement intégré : capable de détecter jusqu'à 6 axes sur une seule puce
   ∘ gain de surface par rapport à des capteurs assemblés
   ∘ forte précision d'alignement par rapport à des capteurs assemblés
   ∘ les accéléromètres et gyroscopes n'ont pas besoin de 2 pressions de packaging différents comme c'est le cas dans les autres systèmes (pression atmosphérique pour les accéléromètres, vide pour les gyroscopes)
- possibilité d'être géré par une seule électronique, avec une seule boucle d'excitation et une même électronique de lecture, à la fois pour les accéléromètres et les gyroscopes (Bien entendu, on peut également utiliser une électronique de lecture pour chaque axe de détection du dispositif de l'invention.)
- possibilité de lecture des différents axes par multiplexage temporel (lecture des axes l'un après l'autre à une fréquence sensiblement plus importante que la fréquence du mouvement d'excitation)
- sensibilités entre axes (« cross axis ») réduites et facilement optimisables par l'utilisation de structures séparées dédiées à la détection de chaque axe et l'utilisation possible de dual-mass
- l'actionnement peut être électrostatique, piézo-électrique, magnétique...
- la détection peut être capacitive, piézo-électrique, magnétique, piézo-résistive etc., le principe physique de détection est préférentiellement le même pour tous les axes d'une puce
- l'actionnement peut être réalisé sur le cadre d'excitation du gyroscope à disque oscillant et/ou sur un ou plusieurs cadres d'excitation des accéléromètres/gyroscopes ayant un mouvement d'excitation linéaire.
- les accéléromètres/gyroscopes à mouvement linéaire sont préférentiellement des dual-mass
- ces dual-mass ont préférentiellement un couplage fort en excitation
- le couplage en excitation peut être réalisé par un ressort reliant les 2 cadres d'excitation de chaque dual mass
- avantageusement, le couplage direct en phase des accéléromètres dynamique peut être réalisé par une liaison rigide (auquel cas on peut considérer que les masses du dual-mass sont confondues)
- ces dual-mass peuvent avoir un couplage en détection, de préférence fort, notamment pour les accéléromètres
- le couplage des masses de détection des gyroscopes peut être réalisé par une barre rigide en rotation autour de l'axe de la rotation à détecter afin de rendre les gyroscopes très peu sensibles aux accélérations
- la transmission du mouvement d'excitation entre le gyroscope à disque oscillant et les accéléromètres/gyroscopes à mouvement linéaire se fait préférentiellement par des ressorts rigides dans la détection d'excitation et conformes dans la direction orthogonale du plan
- le nombre de capteurs à mouvement translatoire est quelconque ; il peut être de moins de 4, mais dans ce cas là, tous les axes ne seront pas mesurés, ou de plus de 4 et dans ce cas là, il y aura potentiellement des redondances
- le gyroscope à disque oscillant peut n'avoir qu'un axe de détection (X ou Y)
- plusieurs gyroscopes à disque oscillant (par exemple 1 gyroscope X et un gyroscope Y) peuvent être reliés entre eux par l'intermédiaires de leur cadre d'excitation

L'invention n'est pas limitée aux modes de réalisation décrits mais s'étend à tout mode de réalisations similaires qui présentent les mêmes avantages précédemment mentionnés.

## Revendications

1. Capteur inertiel multiaxes de mouvement comprenant:
- un premier capteur (500); et
- un deuxième capteur (400);
- une structure de couplage (200) en rotation autour d'un axe Z, comportant un élément oscillant dont les oscillations dans le plan XY autour de l'axe Z lui sont transmises par l'énergie cinétique d'excitation d'un excitateur et configurée pour opérer une transmission de mouvement entre respectivement :
∘ le premier capteur (500) au moyen d'une première masse d'excitation (520) ayant un premier degré de liberté en translation selon un premier axe d'excitation dans un plan XY perpendiculaire à l'axe Z; et
∘ le deuxième capteur (400) au moyen d'une deuxième masse d'excitation (420) ayant un deuxième degré de liberté en translation selon un deuxième axe d'excitation du plan XY, le deuxième axe d'excitation de la deuxième masse d'excitation étant différent au premier axe d'excitation de la première masse d'excitation ;
le capteur inertiel étant **caractérisé en ce qu'**il comprend un gyroscope à disque oscillant dans le plan XY ayant un degré de liberté en rotation autour de l'axe Z et comprenant une couronne centrale (230) couplée à une couronne extérieure d'excitation (210) formant au moins partiellement la structure de couplage (200), la couronne centrale (230) ayant au moins un degré de liberté en rotation autour d'un premier axe du plan XY et transmettant au moins en partie une force de Coriolis pour mesurer un mouvement de rotation suivant un deuxième axe du plan XY perpendiculaire au premier axe; et
dans lequel la structure de couplage comporte, pour chacun des premier et deuxième capteurs (400, 500), une liaison configurée pour transformer le mouvement de rotation selon l'axe Z de la structure de couplage (200) en mouvement de translation dans le plan XY ; et
dans lequel la couronne extérieure d'excitation (210) est couplée, via les liaisons, aux masses d'excitation (520, 420) du premier capteur (500) et du deuxième capteur (400) pour leur transmettre des mouvements d'excitation linéaire dans le plan XY.

2. Capteur inertiel selon la revendication précédente **caractérisé en ce que** le gyroscope (200) à disque oscillant dans le plan XY comprend en outre :
- une couronne intermédiaire (220) soumises à la force de Coriolis, et configurée pour transmettre au moins en partie une force de Coriolis à la couronne centrale (230) sans transmettre au moins en partie les oscillations de la couronne extérieure d'excitation (210) pour assurer un découplage entre excitation et détection.

3. Capteur inertiel selon l'une des revendications précédentes **caractérisé en ce que** le premier capteur est un accéléromètre dynamique (500) comprenant :
- la première masse d'excitation (520) couplée à la structure de couplage (200);
- une première masse de détection (510) solidaire du mouvement de la première masse d'excitation (520) et mobile selon une direction perpendiculaire au premier axe d'excitation ; et
- un détecteur configuré pour détecter une accélération lors de déplacements de la première masse de détection (510) suivant la direction perpendiculaire au premier axe d'excitation.

4. Capteur inertiel selon la revendication précédente **caractérisé en ce que** le détecteur comprend un élément de transmission (521) solidaire du mouvement de la première masse de détection (510) suivant la direction perpendiculaire au premier axe d'excitation mais pas selon le premier axe d'excitation, et une jauge de mesure des efforts subis par l'élément de transmission (521).

5. Capteur inertiel selon l'une des deux revendications précédentes dans lequel la première masse de détection (510) comprend deux masses d'inertie (511, 512) individuelles configurées pour filtrer les mouvements dus à une force de Coriolis résultant d'une rotation.

6. Capteur inertiel selon la revendication précédente dans lequel les masses d'inertie (511, 512) sont couplées de sorte à présenter des mouvements en phase selon le premier axe d'excitation.

7. Capteur inertiel selon l'une des revendications précédentes **caractérisé en ce que** le deuxième capteur est un gyroscope (400) comprenant :
- la deuxième masse d'excitation (420) couplée à la structure de couplage (200);
- une deuxième masse de détection (410) mobile selon une direction perpendiculaire au deuxième axe d'excitation ; et
- un détecteur configuré pour détecter une force de Coriolis résultant de déplacements de la deuxième masse de détection (410) selon la direction perpendiculaire au deuxième axe d'excitation.

8. Capteur inertiel selon la revendication précédente dans lequel le détecteur comprend un élément de transmission (421) solidaire du mouvement de la deuxième masse de détection (410) suivant la direction perpendiculaire au deuxième axe d'excitation mais pas selon le deuxième axe d'excitation, et au moins une jauge de mesure des efforts subis par l'élément de transmission (421).

9. Capteur inertiel selon l'une des deux revendications précédentes dans lequel la deuxième masse de détection (410) comprend deux masses d'inertie (411, 412) individuelles configurées pour filtrer les mouvements d'accélération.

10. Capteur inertiel selon la revendication précédente dans lequel les masses d'inertie (411, 412) sont couplées de sorte à présenter des mouvements en opposition de phase selon le deuxième axe d'excitation.

11. Capteur inertiel selon l'une des revendications précédentes **caractérisé en ce que** la structure de couplage (200) comporte au moins deux disques oscillants (900, 901) en rotation autour d'un axe Z et couplés entre eux par leurs circonférences.

12. Capteur inertiel selon l'une des revendications précédentes comprenant au moins un capteur additionnel, la structure de couplage (200) étant configurée pour opérer une transmission de mouvement avec le capteur additionnel.

13. Capteur inertiel selon l'une des revendications précédentes comprenant un seul circuit électronique une seule boucle d'asservissement en excitation et d'un seul élément de lecture des premier et deuxième capteurs (400, 500) pour tous les axes.

14. Capteur inertiel selon l'une quelconque des revendications dans lequel l'excitateur comprend des électrodes d'excitation de la première masse d'excitation (520) et/ou des électrodes d'excitation de la deuxième masse d'excitation (420) et/ou des électrodes d'excitation de la structure de couplage (200).

15. Capteur inertiel selon l'une quelconque des revendications dans lequel l'excitateur est configuré pour exciter au moins deux parmi : la structure de couplage (200), la première masse d'excitation (520) et la deuxième masse d'excitation (420), et dans lequel l'excitateur comporte un circuit d'asservissement.

## Patentansprüche

1. Mehrachsen-Bewegungsträgheitssensor, enthaltend:
- einen ersten Sensor (500); und
- einen zweiten Sensor (400);
- eine um eine Z-Achse drehende Kopplungsstruktur (200), die ein oszillierendes Element enthält, dessen Schwingungen in der XY-Ebene um die Z-Achse durch die kinetische Anregungsenergie eines Erregers auf sie übertragen werden, und die dazu ausgelegt ist, um eine Bewegungsübertragung durchzuführen jeweils zwischen:
º dem ersten Sensor (500) mittels einer ersten Anregungsmasse (520) mit einem ersten Translationsfreiheitsgrad entlang einer ersten Anregungsachse in einer zur Z-Achse senkrechten XY-Ebene; und
º dem zweiten Sensor (400) mittels einer zweiten Anregungsmasse (420) mit einem zweiten Translationsfreiheitsgrad entlang einer zweiten Anregungsachse der XY-Ebene, wobei sich die zweite Anregungsachse der zweiten Anregungsmasse von der ersten Anregungsachse der ersten Anregungsmasse unterscheidet;
wobei der Trägheitssensor **dadurch gekennzeichnet ist, dass** er ein Gyroskop mit in der XY-Ebene oszillierender Scheibe mit einem Rotationsfreiheitsgrad um die Z-Achse aufweist und einen zentralen Ring (230) umfasst, der mit einem äußeren Anregungsring (210) gekoppelt ist, der zumindest teilweise die Kopplungsstruktur (200) bildet, wobei der zentrale Ring (230) zumindest einen Rotationsfreiheitsgrad um eine erste Achse der XY-Ebene aufweist und zumindest teilweise eine Coriolis-Kraft zum Messen der Rotationsbewegung entlang einer senkrecht zu der ersten Achse verlaufenden zweiten Achse der XY-Ebene überträgt; und
wobei die Kopplungsstruktur für jeden aus erstem und zweitem Sensor (400, 500) eine Verbindung aufweist, die dazu ausgelegt ist, um die Rotationsbewegung der Kopplungsstruktur (200) entlang der Z-Achse in eine Translationsbewegung in der XY-Ebene umzuwandeln; und
wobei der äußere Anregungsring (210) über Verbindungen mit den Anregungsmassen (520, 420) des ersten Sensors (500) und des zweiten Sensors (400) gekoppelt ist, um lineare Anregungsbewegungen in der XY-Ebene auf sie zu übertragen.

2. Trägheitssensor nach dem vorangehenden Anspruch, **dadurch gekennzeichnet, dass** das Gyroskop (200) mit in der XY-Ebene oszillierender Scheibe ferner enthält:
- einen Zwischenring (220), welcher der Coriolis-Kraft ausgesetzt wird und dazu ausgelegt ist, zumindest teilweise eine Coriolis-Kraft auf den zentralen Ring (230) zu übertragen, ohne dabei zumindest teilweise die Schwingungen des äußeren Anregungsring (210) zu übertragen, um eine Entkopplung zwischen Anregung und Detektion sicherzustellen.

3. Trägheitssensor nach einem der vorangehenden Ansprüche, **dadurch gekennzeichnet, dass** der erste Sensor ein dynamischer Beschleunigungsmesser (500) ist, enthaltend:
- die erste Anregungsmasse (520), die mit der Kopplungsstruktur (200) gekoppelt ist;
- eine erste Detektionsmasse (510), die an die Bewegung der ersten Anregungsmasse (520) gebunden ist und in einer Richtung senkrecht zu der ersten Anregungsachse beweglich ist; und
- einen Detektor, der dazu ausgelegt ist, um eine Beschleunigung bei Verlagerungen der ersten Detektionsmasse (510) in der Richtung senkrecht zu der ersten Anregungsachse zu detektieren.

4. Trägheitssensor nach dem vorangehenden Anspruch, **dadurch gekennzeichnet, dass** der Detektor ein Übertragungselement (521) enthält, das an die Bewegung der ersten Detektionsmasse (510) in der Richtung senkrecht zu der ersten Anregungsachse, jedoch nicht entlang der ersten Anregungsachse, gebunden ist, sowie einen Dehnungsmessstreifen zum Messen der Kräfte, die das Übertragungselement (521) erfährt.

5. Trägheitssensor nach einem der beiden vorangehenden Ansprüche, wobei die erste Detektionsmasse (510) zwei einzelne Trägheitsmassen (511, 512) enthält, die dazu ausgelegt sind, Bewegungen aufgrund einer Coriolis-Kraft, die aus einer Rotation resultiert, auszufiltern.

6. Trägheitssensor nach dem vorangehenden Anspruch, **dadurch gekennzeichnet, dass** die Trägheitsmassen (511, 512) so gekoppelt sind, dass Bewegungen in Phase entlang der ersten Anregungsachse aufgezeigt werden.

7. Trägheitssensor nach einem der vorangehenden Ansprüche, **dadurch gekennzeichnet, dass** der zweite Sensor ein Gyroskop (400) ist, enthaltend:
- die zweite Anregungsmasse (420), die mit der Kopplungsstruktur (200) gekoppelt ist;
- eine zweite Detektionsmasse (410), die in einer Richtung senkrecht zu der zweiten Anregungsachse beweglich ist; und
- einen Detektor, der dazu ausgelegt ist, um eine aus den Verlagerungen der zweiten Detektionsmasse (410) in der Richtung senkrecht zu der zweiten Anregungsachse resultierende Coriolis-Kraft zu detektieren.

8. Trägheitssensor nach dem vorangehenden Anspruch, wobei der Detektor ein Übertragungselement (421) enthält, das an die Bewegung der zweiten Detektionsmasse (410) in der Richtung senkrecht zu der zweiten Anregungsachse, jedoch nicht entlang der zweiten Anregungsachse, gebunden ist, sowie zumindest einen Dehnungsmessstreifen zum Messen der Kräfte, die das Übertragungselement (421) erfährt.

9. Trägheitssensor nach einem der beiden vorangehenden Ansprüche, wobei die zweite Detektionsmasse (410) zwei einzelne Trägheitsmassen (411, 412) enthält, die dazu ausgelegt sind, Beschleunigungsbewegungen auszufiltern.

10. Trägheitssensor nach dem vorangehenden Anspruch, wobei die Trägheitsmassen (411, 412) so gekoppelt sind, dass gegenphasige Bewegungen entlang der zweiten Anregungsachse aufgezeigt werden.

11. Trägheitssensor nach einem der vorangehenden Ansprüche, **dadurch gekennzeichnet, dass** die Kopplungsstruktur (200) zumindest zwei oszillierende Scheiben (900, 901) enthält, die um eine Z-Achse rotieren und an ihren Umfängen miteinander gekoppelt sind.

12. Trägheitssensor nach einem der vorangehenden Ansprüche, enthaltend zumindest einen zusätzlichen Sensor, wobei die Kopplungsstruktur (200) dazu ausgelegt ist, eine Bewegungsübertragung mit dem zusätzlichen Sensor auszuführen.

13. Trägheitssensor nach einem der vorangehenden Ansprüche, enthaltend für sämtliche Achsen eine einzige elektronische Schaltung, eine einzige Anregungsregelschleife und ein einziges Ausleseelement zum Auslesen des ersten und des zweiten Sensors (400, 500).

14. Trägheitssensor nach einem der vorangehenden Ansprüche, wobei der Erreger Erregerelektroden für die erste Anregungsmasse (520) und/oder Erregerelektroden für die zweite Anregungsmasse (420) und/oder Erregerelektroden für die Kopplungsstruktur (200) enthält.

15. Trägheitssensor nach einem der vorangehenden Ansprüche, wobei der Erreger dazu ausgelegt ist, zumindest zwei aus Kopplungsstruktur (200), erster Anregungsmasse (520) und zweiter Anregungsmasse (420) zu erregen und wobei der Erreger eine Regelschleife enthält.

## Claims

1. Multiaxial inertial movement sensor comprising:
- a first sensor (500); and
- a second sensor (400);
- a structure (200) for coupling in rotation about an axis Z, comprising an oscillating element, the oscillations of which in the plane XY about the axis Z are transmitted to said structure by the kinetic energy of excitation of an exciter, and configured in order to
carry out a transmission of movement between, respectively:
- the first sensor (500) via a first excitation mass (520) having a first degree of freedom in translation along a first axis of excitation in a plane XY perpendicular to the axis Z; and
- the second sensor (400) via a second excitation mass (420) having a second degree of freedom in translation along a second axis of excitation of the plane XY, the second axis of excitation of the second excitation mass being different than the first axis of excitation of the first excitation mass;
the inertial sensor being **characterised in that** it comprises a gyroscope having a disc oscillating in the plane XY, having a degree of freedom in rotation about the axis Z, and comprising a central ring (230) coupled to an outer excitation ring (210) at least partly forming the coupling structure (200), the central ring (230) having at least one degree of freedom in rotation about a first axis of the plane XY and at least partly transmitting a Coriolis force in order to measure a movement of rotation along a second axis of the plane XY perpendicular to the first axis; and
wherein the coupling structure comprises, for each of the first and second sensor (400, 500), a link configured to transform the movement of rotation along the axis Z of the coupling structure (200) into a movement of translation in the plane XY; and
wherein the outer excitation ring (210) is coupled, via the links, to the excitation masses (520, 420) of the first sensor (500) and of the second sensor (400) in order to transmit, to said masses, movements of linear excitation in the plane XY.

2. Inertial sensor according to the previous claim, **characterised in that** the gyroscope (200) having a disc oscillating in the plane XY further comprises:
- an intermediate ring (220) subjected to the Coriolis force, and configured to at least partly transmit a Coriolis force to the central ring (230) without at least partly transmitting the oscillations of the outer excitation ring (210) in order to ensure a decoupling between excitation and detection.

3. Inertial sensor according to one of the previous claims, **characterised in that** the first sensor is a dynamic accelerometer (500) comprising:
- the first excitation mass (520) coupled to the coupling structure (200);
- a first detection mass (510) constrained to move with the first excitation mass (520) and mobile in a direction perpendicular to the first excitation axis; and
- a detector configured to detect an acceleration during movements of the first detection mass (510) in the direction perpendicular to the first axis of excitation.

4. Inertial sensor according to the previous claim, **characterised in that** the detector comprises a transmission element (521) constrained to move with the first detection mass (510) in the direction perpendicular to the first axis of excitation but not along the first axis of excitation, and a gauge for measuring the stresses to which the transmission element (521) is subjected.

5. Inertial sensor according to one of the previous two claims, wherein the first detection mass (510) comprises two individual inertial masses (511, 512) configured to filter the movements caused by a Coriolis force resulting from a rotation.

6. Inertial sensor according to the previous claim, wherein the inertial masses (511, 512) are coupled in such a way as to have movements in phase along the first axis of excitation.

7. Inertial sensor according to one of the previous claims, **characterised in that** the second sensor is a gyroscope (400) comprising:
- the second excitation mass (420) coupled to the coupling structure (200);
- a second detection mass (410) mobile in a direction perpendicular to the second axis of excitation; and
- a detector configured to detect a Coriolis force resulting from movements of the second detection mass (410) in the direction perpendicular to the second axis of excitation.

8. Inertial sensor according to the previous claim, wherein the detector comprises a transmission element (421) constrained to move with the second detection mass (410) in the direction perpendicular to the second axis of excitation but not along the second axis of excitation, and at least one gauge for measuring the stresses to which the transmission element (421) is subjected.

9. Inertial sensor according to one of the previous two claims, wherein the second detection mass (410) comprises two individual inertial masses (411, 412) configured to filter the movements of acceleration.

10. Inertial sensor according to the previous claim, wherein the inertial masses (411, 412) are coupled in such a way as to have movements in phase opposition along the second axis of excitation.

11. Inertial sensor according to one of the previous claims, **characterised in that** the coupling structure (200) comprises at least two oscillating discs (900, 901) in rotation about an axis Z and coupled together by their circumferences.

12. Inertial sensor according to one of the previous claims, comprising at least one additional sensor, the coupling structure (200) being configured to carry out a transmission of movement with the additional sensor.

13. Inertial sensor according to one of the previous claims, comprising a single electronic circuit a single excitation control loop and of a single element for reading the first and second sensor (400, 500) for all the axes.

14. Inertial sensor according to any one of the claims, wherein the exciter comprises electrodes for exciting the first excitation mass (520) and/or electrodes for exciting the second excitation mass (420) and/or electrodes for exciting the coupling structure (200).

15. Inertial sensor according to any one of the claims, wherein the exciter is configured to excite at least two out of: the coupling structure (200), the first excitation mass (520) and the second excitation mass (420), and wherein the exciter comprises a control circuit.
